# EUROPEAN PATENT SPECIFICATION

(11) **EP 0 958 083 B1**
(45) Date of publication and mention of the grant of the patent: **26.09.2001**
(21) Application number: 96934446.4
(22) Date of filing: 17.10.1996
(51) Int. Cl.: B23B 51/04

(54) **ADAPTOR FOR ROTATING TOOLS**
ADAPTION FÜR DREHENDE WERKZEUGE
ADAPTATEUR POUR OUTILS ROTATIFS

(30) Priority: 18.10.1995 DK 117595
(43) Date of publication of application: 24.11.1999
(73) Proprietor: THUESEN, Jorgen, 2000 Frederiksberg (DK)
(72) Inventor: THUESEN, Jorgen, 2000 Frederiksberg (DK)
(74) Representative: Simonsen, Christian Rosendal
(86) International application number: DK9600442
(87) International publication number: WO9714526

(56) References cited:
- GB-A- 2 257 381
- US-A- 3 647 310
- US-A- 3 758 221
- US-A- 3 837 759
- US-A- 4 148 593

## Description

The present invention relates to an adaptor for rotating tools for mounting in a drilling machine. The rotating tool is generally a saw cup, but can also be a sanding disc.

An often used saw cup for industrial and craftsmanslike purposes is a kind where a supporting plate of the saw cup is provided with a centrally placed threaded hole and two or four holes radially spaced in relation to the threaded hole. This saw cup is designed for mounting in an adaptor, the saw cup being screwed onto a grub screw placed on the adaptor, whereafter one or more driving pins are moved and engaged in one or more of the radially spaced holes.

The prior art discloses various embodiments of such an adaptor, e.g. see GB 2 257 381 A which discloses the features of the preamble of claim 1. This publication an adaptor is disclosed, whereby the saw cup is screwed onto a grub screw of a continuous shaft against a yoke and the saw cup is then turned back a little in order that two driving pins fitted on a spring-loaded sleeve can be moved through holes in the yoke and be placed into the radially spaced holes of the saw cup. On this and other known adaptors, the saw cup is screwed onto a threaded part of the continuous shaft and turned back until the holes of the saw cup are opposite to the driving pins, and the driving pins are eventually moved into the holes.

By this design of the known adaptors the driving pins only lock the saw cup so that it does not turn in relation to the adaptor in the rotation direction when the tool is used. However, the saw cup is not locked in cross directions and will therefore be loose in the thread and vibrate when used. These vibrations result in an inaccurate hole, reduce the durability of the saw cup and are conveyed to the drilling machine, in which the adaptor is mounted.

The object of the present invention is to provide an adaptor for rotating tools, which does not entail the above mentioned disadvantages connected with the prior art.

According to the invention, this object is obtained by an adaptor for rotating tools for mounting in a drilling machine, said adaptor comprising a continuous shaft, provided in one end with means for fastening onto a drilling machine and in the other end with a thread for mounting of the tool, and an element, which in relation to the shaft is movable in axial direction and fixed in the rotating direction, said element being provided with at least one driving pin placed parallel to the shaft, but radially spaced in relation thereto, at least one driving pin being able to engage into a corresponding hole of the tool, which adaptor is characterized in an abutting element, which at least partly can be displaced in axial direction and clamped against the tool.

The abutting element may be constituted by a sleeve placed on the shaft, said sleeve being preferably clamped by a screw nut, which is displaced when it is turned around a threaded part provided on a middle part of the shaft behind the sleeve. If desired, the abutting element may also be clamped by an element, which is spring-loaded to such an extent that the abutting element, by use of the adaptor, will abut on the supporting plate of the saw cup.

Alternatively, the abutting element can be constituted by a fixed yoke and a biased element on the shaft, which is provided with holes for the driving pins, which at least can be compacted 1/4 lead for saw cups with 4 holes for absorption of driving pins (for saw cups with 2 holes, at least % lead). The advantage of this embodiment is that the saw cup is simple and easy to mount, because it is not necessary to turn the saw cup back before the driving pins fitted on the element fixed in the rotating direction are placed in the holes of the saw cup.

To ensure that the element fixed in relation to the shaft in the rotating direction is movable in axial direction any technical solution, where this is obtained, may be used.

In one embodiment, the fixing in the rotating direction is provided by a crossbar in a gap of the shaft, said crossbar connecting the two opposite sides of the inner hole in the element. However, it is preferred, regarding the strength of the shaft, that the shaft is without a weakening gap and that, just behind the threaded part for mounting of tools, it is provided with a stop, e.g. in the shape of a shoulder element, and especially in the shape of a cylindrical sliding element with a diameter, which is larger than the diameters of the surrounding parts of the shaft. Alternatively, a threaded stop can be provided, above which the saw cup cannot be screwed, e.g. by breaking or destroying the thread, or simply because the thread is not any longer. The advantage, by providing the shaft with a stop, is that, according to the invention, the rotating tool always has to be screwed onto the adaptor with the same number of revolutions so that a uniform mounting is ensured.

Preferably, the sliding element has a non-circular cylindrical shape, and the shape of the hole of the sleeve corresponds to the shape of the sliding element in at least part of the extent of the sleeve. The thread, on which the saw cup is fitted, ends in a prefered embodiment, at the sliding element or the shoulder combined with a biased element, which the saw cup is screwed onto in a downwards movement.

Variations from the cylindrical shape, which is provided in the sliding element, may be of any suitable type, e.g. one or more longitudinal faces, scores, chamfers etc.

In case the sliding element is provided with longitudinal chamfers, the driving pins may be provided in the sleeve, so that they extend towards the middle of the shaft, thereby breaking the cylindrical periphery. The driving pins essentially have the same diameter as the chamfers.

Furthermore, the necessary fixing of the sleeve in relation to the continuous shaft in the rotating direction can be secured by one or more spikes extending radially from the sliding element. In this case, the sleeve has to be shaped with corresponding scores to fit the spikes, so that the sleeve is movable in axial direction in relation to the shaft.

The thread, on which the screw nut is displaced, can either be a right-hand or a left-hand thread.

Usually, when the tool is a saw cup, a steering drill is used, which is mounted in the shaft of the adaptor. This drill is fastened by a bolt, which is screwed onto the drill through the sliding element. In one embodiment, this bolt can extend above the surface of the sliding element, so that the bolt can also act as the spike, which extends radially outwards from the sliding element.

The end of the sleeve, which faces the screw nut, may, if desired, be provided by a backing, ensuring that the sleeve cannot move considerably forward in axial direction forward past the sliding element.

The invention will be illustrated in the following by embodiments referring to the drawing, wherein:
- fig. 1: discloses a perspective view of the adaptor, whereby the driving pins fitted in the sleeve extend into the sliding element provided on the shaft,
- fig. 2: discloses a vertical cross-sectional view of the adaptor shown in fig. 1,
- fig. 3: discloses a horizontal cross-sectional view of the adaptor shown in fig. 1,
- fig. 4: discloses a perspective view of an adaptor according to the invention, whereby the irregularities in the circular cylindrical shape of the sliding element are constituted of longitudinal opposing faces,
- fig. 5: discloses a vertical cross-sectional view of the adaptor shown in fig. 4,
- fig. 6: discloses a horizontal cross-sectional view of the adaptor shown in fig. 4,
- fig. 7: discloses a perspective view of an adaptor according to the invention, whereby the driving pins are shoved through a yoke provided with a biased element,
- fig. 8: discloses a vertical cross-sectional view of the adaptor shown in fig. 7, and
- fig. 9: discloses a horizontal cross-sectional view of the adaptor shown in fig. 7.

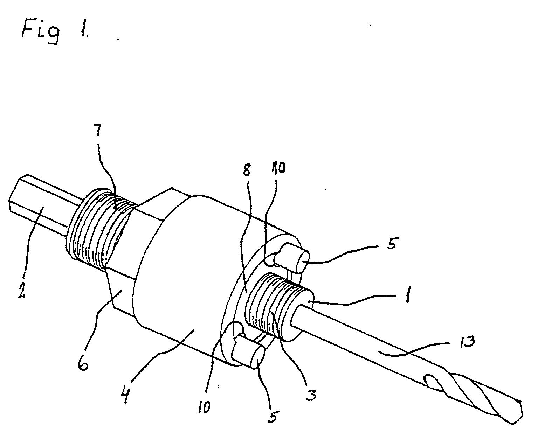

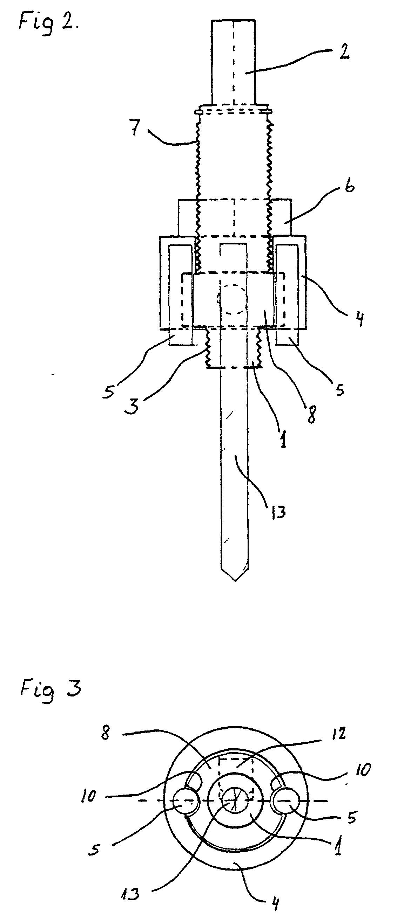

In the embodiment shown in fig. 1, 2 and 3 the adaptor according to the invention comprises a continuous shaft 1 provided in one end with means 2 for fastening in a drilling machine and in the other end with thread 3 for mounting of a rotating tool. The shaft is provided with a sleeve 4, which is movable in axial direction, but is fixed in the rotating direction. The sleeve 4 is provided with two driving pins 5 placed opposite each other on either side of the shaft 1. A screw nut 6 can, by a thread 7 provided on the shaft 1 behind the sleeve 4, be displaced in axial direction forward and clamped against the sleeve. The shaft 1 is provided with a sliding element 8, which is partly cylindrical with a diameter larger than the surrounding parts of the shaft. The sliding element is provided with two chamfers 10, wherein the driving pins can slide. In the sliding element 8 a threaded hole is provided, in which a screw 12 is fitted for fixing a steering drill 13.

The adaptor for rotating tools is operated in the following way: The rotating tool, e.g. a saw cup, is mounted by screwing the threaded hole of the saw cup down onto the threaded part of the shaft util the saw cup is screwed against the sliding element 8. The saw cup is then screwed back so that the two driving pins 5 of the sleeve 4 can be moved into the corresponding holes of the saw cup. Subsequently, the screw nut 6 is displaced forwards on the threaded part until the sleeve 4 abut on the supporting plate of the saw cup. By fastening the screw nut, it is ensured that the threaded slack is eliminated and that the saw cup is prevented from rocking in relation to the adaptor, so that when operated, a precise hole and a longer durability of the saw cup is obtained.

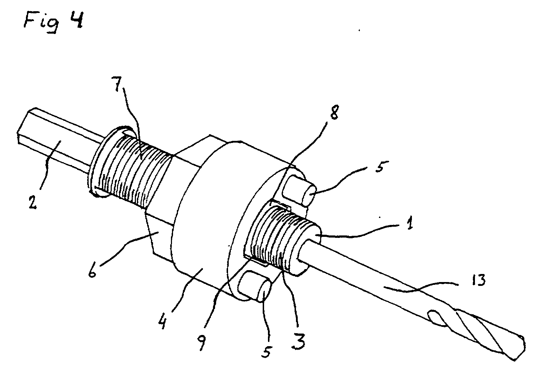

Fig. 4 discloses another prefered embodiment according to the invention. Unlike the first embodiment, the irregularities in the partly cylindrical sliding element consist of two opposing faces 9. The sleeve surrounding the sliding element is provided with an inner shape, which corresponds to the shape of the sliding element.

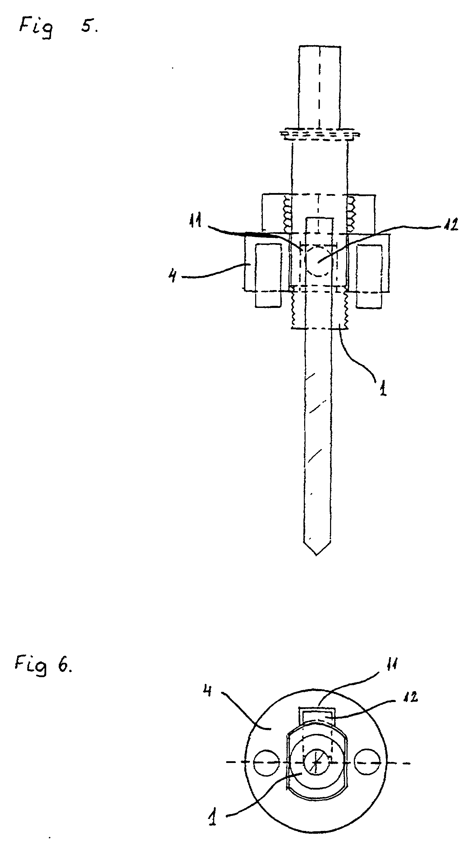

If desired, the two mentioned embodiments in fig. 1 and 4, respectively, can be altered as shown in fig. 5 and 6 for the embodiment according to fig. 4. Thus, the screw 12 is shaped so that it extends above the periphery of the partly cylindrical sliding element 8 into the longitudinal score 11 provided in the sleeve 4.

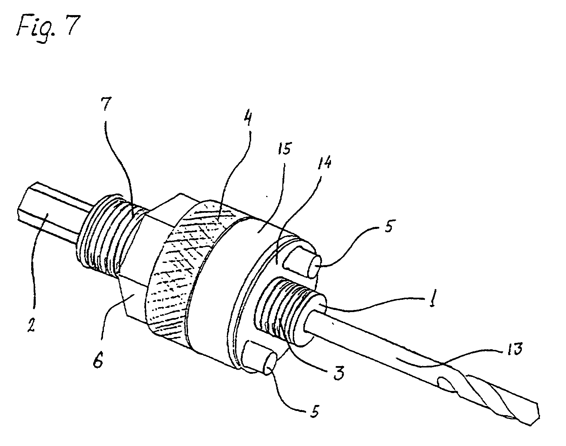

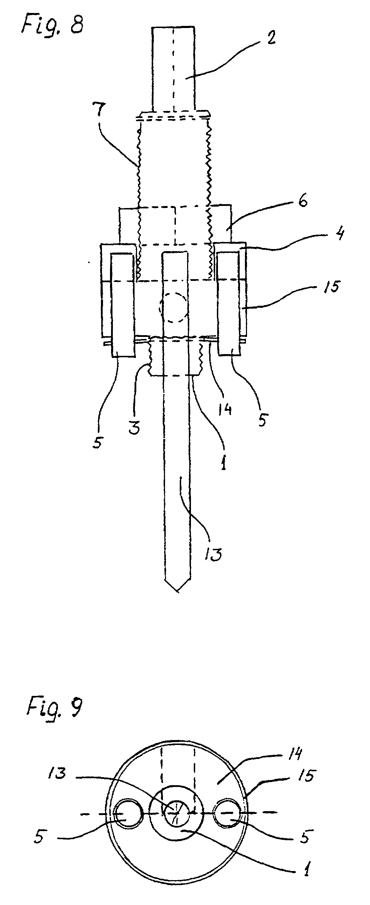

In the embodiment shown in fig. 7, 8 and 9, the adaptor consists of a yoke 15 fixed onto the shaft. Behind the yoke a to-and-fro movable sleeve is provided with two driving pins 5, which extend through holes in the yoke. In front of the yoke a biased disc is provided.

When the saw cup is crewed onto the thread 3, in the rotating moment, the user will sense, when it abuts on the biased disc 14. Thereafter, the user has to screw the saw cup further into the thread until the holes of the saw cup are opposite to the driving pins, whereafter the sleeve 4 with the driving pins is shoved forwards so that the pins engage into the holes of the saw cup. Finally, the screw nut is fastened against the sleeve 4.

## Claims

1. An adaptor for rotating tools for mounting in a drilling machine, comprising a continuous shaft (1), provided in one end with means (2) for fastening in a drilling machine and in the other end with a thread (3) for mounting of the tool, and an element (4), which in relation to the shaft, is movable in axial direction and fixed in the rotating direction, said element being provided with at least one driving pin (5) placed parallel to the shaft, but radially spaced in relation thereto, at least one driving pin being able to engage into a corresponding hole of the tool, **characterized in** an abutting element, which at least partly can be displaced in axial direction and clamped against the tool.

2. An adaptor according to claim 1, **characterized in that** the abutting element is constituted by a sleeve placed on the shaft, which is clamped by a screw nut (6), which can be displaced by turning said screw nut around a threaded part (7) provided on a middle part of the shaft behind the sleeve.

3. An adaptor according to claim 1 or 2,
**characterized in that** the abutting element is constituted by the element provided with at least one driving pin.

4. An adaptor according to claim 1, 2 or 3, **characterized in that** , immediately behind the thread part for mounting of tools, the shaft is provided with a stop, which mainly is constituted by a shoulder element.

5. An adaptor according to claim 1,
**characterized in that** the abutting element is constituted by a biassed element (14) on a yoke (15), which is fixed onto the shaft, said yoke being provided with holes for the driving pins.

6. An adaptor according to claims 1-4,
**characterized in that**, immediately behind the threaded part for mounting tools, the shaft is provided with a partly cylindrical sliding element (8) with a diameter, which is larger than the surrounding parts of the shaft, said sliding element having a non-circular cylindrical shape, and the shape of the hole of the sleeve corresponds to the shape of the sliding element in at least part of the extent of the sleeve.

7. An adaptor according to claim 6, **characterized in that** one or more faces (9) are provided in the sliding element.

8. An adaptor according to claim 6 or 7,
**characterized in that** at least one longitudinal chamfer (10) is provided in the sliding element.

9. An adaptor according to claim 8, **characterized in that** the sleeve corresponds to the longitudinal chamfer(s) so that said sleeve is provided with the driving pins extending towards the middle of the shaft, said driving pins essentially having the same diameter as the chamfers.

10. An adaptor according to claim 1-9,
**characterized in that** the rotating tool is a saw cup.

## Patentansprüche

1. Adapter für drehende Werkzeuge zum Einspannen an eine Bohrmaschine, welcher Adapter eine kontinuierliche Welle (1), die an einem Ende mit Mitteln (2) zum Befestigen an einer Bohrmaschine und am anderen Ende mit einem Gewinde (3) zum Einspannen des Werkzeuges umfasst und im Verhältnis zur Welle axial verstellbares und in der Drehrichtung feststehendes Element (4) aufweist, wobei dieses mit zumindest einem gegenüber der Welle parallel verlaufenden, aber dazu radial verstellten Mitbringerzapfen (5) versehen ist, indem zumindest ein Mitbringerzapfen in eine entsprechende Bohrung des Werkzeuges einrasten kann, **gekennzeichnet durch** eine Haltevorrichtung, die in axialer Richtung mindestens teilweise verstellbar ist und mit dem Werkzeug einrasten kann.

2. Adapter nach Anspruch 1, **dadurch gekennzeichnet, dass** die Haltevorrichtung aus einer sich an der Welle befindlichen Buchse, die mit einer Schraubenmutter (6) im Eingriff ist, besteht, wobei die Schraubenmutter durch Anziehen um ein inmitten der Welle hinter der Buchse vorhandenes Gewinde (7) verstellbar ist.

3. Adapter nach Anspruch 1 oder 2, **dadurch gekennzeichnet, dass** die Haltevorrichtung aus dem Element einschliesslich zumindest eines Mitbringerzapfens besteht.

4. Adapter nach Anspruch 1, 2 oder 3, **dadurch gekennzeichnet, dass** die Welle unmittelbar hinter dem zum Einspannen der Werkzeuge vorgesehenen Gewinde mit einer hauptsächlich aus einem Ansatzelement bestehenden Sperre versehen ist.

5. Adapter nach Anspruch 1, **dadurch gekennzeichnet, dass** die Haltevorrichtung aus einem schrägen sich an einem Joch (15) befindlichen Element (14) besteht, wobei das Joch an der Welle befestigt ist und darin Bohrungen für die Mitbringerzapfen vorgesehen sind.

6. Adapter nach den Ansprüchen 1-4, **dadurch gekennzeichnet, dass** die Welle unmittelbar hinter dem zum Einspannen der Werkzeuge vorgesehenen Gewinde ein teilweise zylindrisches Gleitelement (8) umfasst, dessen Durchmesser grösser als denjenigen der umgebenden Wellenteile ist, wobei das erwähnte Gleitelement unrund zylindrisch und die Bohrung der Buchse, jedenfalls innerhalb eines Teils deren Ausmass, entsprechend das Gleitelement ausgeformt ist.

7. Adapter nach Anspruch 6, **dadurch gekennzeichnet, dass** im Gleitelement eine oder mehr Endflächen (9) vorgesehen sind.

8. Adapter nach Anspruch 6 oder 7, **dadurch gekennzeichnet, dass** im Gleitelement zumindest ein längsgehender Kantenbruch (10) vorgesehen ist.

9. Adapter nach Anspruch 8, **dadurch gekennzeichnet, dass** die Ausformung der Buchse dem längsgehenden Kantenbruch bzw. den längsgehenden Kantenbrüchen entspricht, indem sich die Mitbringerzapfen der Buchse gegen die Mitte der Welle erstrecken, wobei diese im wesentlichen denselben Durchmesser wie den der Kantenbrüche aufweisen.

10. Adapter nach den Ansprüchen 1-9, **dadurch gekennzeichnet, dass** das drehende Werkzeug eine Hohlkörpersäge ist.

## Revendications

1. Adaptateur pour des outils rotatifs à monter dans une perceuse, comprenant un arbre continu (1), pourvu dans l'un bout de moyens (2) pour fixation dans une perceuse et dans l'autre bout d'un filet (3) pour montage de l'outil, et un élément (4) qui par rapport à l'arbre peut se déplacer dans la direction axiale et est fixé dans la direction de rotation, élément qui est pourvu d'au moins un tenon d'entraînement (5) placé parallèlement à l'arbre, mais déplacé de manière radiale par rapport à celui-ci, au moins un tenon d'entraînement étant à même de s'engager dans un trou correspondant de l'outil, **caractérisé par** un élément d'appui qui peut au moins partiellement être déplacé dans la direction axiale et serré contre l'outil.

2. Adaptateur selon la revendication 1,
**caractérisé en ce que** l'élément d'appui est constitué par un manchon arrangé sur l'arbre et serré par un écrou (6) qui peut être déplacé par pivotement autour d'une portion filetée (7) pourvue sur une partie centrale de l'arbre derrière le manchon.

3. Adaptateur selon la revendication 1 ou 2,
**caractérisé en ce que** l'élément d'appui est constitué par l'élément pourvu d'au moins un tenon d'entraînement.

4. Adaptateur selon la revendication 1, 2 ou 3,
**caractérisé en ce que**, immédiatement derrière la portion filetée pour montage d'outils, l'arbre est pourvu d'un arrêt qui est principalement constitué par un élément d'épaule.

5. Adaptateur selon la revendication 1,
**caractérisé en ce que** l'élément d'appui est constitué par un élément chargé (14) sur une bague (15) fixée sur l'arbre et pourvue de trous pour les éléments d'entraînement.

6. Adaptateur selon les revendications 1-4,
**caractérisé en ce que**, immédiatement derrière la portion filetée pour montage d'outils, l'arbre est pourvu d'un élément glissant partiellement cylindrique (8) avec un diamètre qui est plus large que les portions entourantes de l'arbre, élément glissant qui présente une forme cylindrique non-circulaire, et en ce que la forme du trou du manchon correspond à la forme de l'élément glissant dans au moins une partie de l'étendue du manchon.

7. Adaptateur selon la revendication 6,
**caractérisé en ce qu'**une ou plusieurs surfaces (9) sont pourvues dans l'élément glissant.

8. Adaptateur selon la revendication 6 ou 7,
**caractérisé en ce qu'**au moins une gorge longitudinale (10) est pourvue dans l'élément glissant.

9. Adaptateur selon la revendication 8,
**caractérisé en ce que** le manchon correspond au ou aux gorge(s) longitudinale(s) si bien que ledit manchon est pourvu des tenons d'entraînement s'étendant vers le centre de l'arbre, tenons d'entraînement qui présentent essentiellement le même diamètre que les gorges.

10. Adaptateur selon la revendication 1-9,
**caractérisé en ce que** l'outil rotatif est une mèche à cuiller.
